# EUROPÄISCHE PATENTSCHRIFT

(11) **EP 3 033 207 B1**
(45) Veröffentlichungstag und Bekanntmachung des Hinweises auf die Patenterteilung: **26.09.2018**
(21) Anmeldenummer: 14771788.8
(22) Anmeldetag: 12.08.2014
(51) Int. Cl.: B29C 31/00, B23Q 7/10, B65G 65/00, H01L 21/677

(54) **HANDHABUNGSVORRICHTUNG ZUM EINSCHIEBEN VON WERKSTÜCKTRÄGERN IN STAPELBOXEN, SYSTEM SOWIE HANDHABUNGSVERFAHREN**
HANDLING DEVICE FOR INSERTING WORKPIECE SUPPORTS INTO STACKABLE BOXES, SYSTEM, AND HANDLING METHOD
DISPOSITIF DE MANIPULATION PERMETTANT D'INSÉRER DES SUPPORTS DE PIÈCES DANS DES BOÎTES DE RANGEMENT

(30) Priorität: 12.08.2013 DE 102013108719
(43) Veröffentlichungstag der Anmeldung: 22.06.2016
(73) Patentinhaber: Waldorf Technik GmbH & Co. KG, 78234 Engen (DE)
(72) Erfinder: CZIZEGG, Wolfgang, 78256 Steisslingen (DE); FUHRMANN, Ralf, 78234 Engen (DE)
(74) Vertreter: Patentanwälte Behrmann Wagner PartG mbB
(86) Internationale Anmeldenummer: PCT/EP2014/067227
(87) Internationale Veröffentlichungsnummer: WO 2015/022316

(56) Entgegenhaltungen:
- EP-A1- 0 384 035
- EP-A2- 2 527 112
- FR-A1- 2 468 544
- US-A- 4 108 323
- US-A- 4 932 828
- US-A- 5 503 516

## Beschreibung

Die Erfindung betrifft eine Handhabungsvorrichtung gemäß dem Oberbegriff des Anspruchs 1 zum Nacheinander-Einschieben von Werkstückträgern in übereinander angeordnete, von einer rechten und einer linken vertikalen Einschubleiste begrenzten Einschubfächern einer Stapelbox, mit Relativverstellmitteln zum vertikalen Relativverstellen von Handhabungsmitteln für die Werkstückträger und der Stapelbox nach mindestens einem, vorzugsweise jedem Einschubvorgang. Ferner betrifft die Erfindung ein Verfahren für die Handhabung von Werkstückträgern gemäß dem Oberbegriff des Anspruchs 10 sowie ein System umfassend eine Handhabungsvorrichtung sowie eine Stapelbox und ggf. einen Werkstückträger gemäß Anspruch 7.

Bei der Herstellung von spritzgegossenen Bauteilen, wie Laborverbrauchsartikeln z.B. Pipettenspitzen, medizinischen Reaktionsgefäßen, Bauteilen von Infusionspens, Kontaktlinsengießformen oder Bauteilen von Inhaliereinrichtungen werden diese nach dem Spritzgussvorgang auf Werkstückträgern angeordnet, wobei die Werkstückträger in Stapelboxen eingeschoben werden, die übereinander angeordnete Einschubfächer für jeweils einen Werkstückträger mit darauf angeordneten Bauteilen aufweisen. Die Stapelboxen sind dabei aus Aluminiumstrangpressprofilen zusammengesetzt, wobei die Einschubfächer gebildet bzw. begrenzt werden von zwei vertikalen Einschubleisten, die die Seitenwände einer quaderförmigen Stapelbox bilden. Wegen der Ausbildung der Einschubleisten als Aluminiumstrangpressprofile ist das Rastermaß jeder Seite eines Einschubfaches definiert bzw. vergleichsweise exakt. Aufgrund der Kraftbeaufschlagung der Stapelboxen in Handhabungsvorrichtungen und beim Transport zwischen verschiedenen Fertigungsstationen werden die Stapelboxen häufig so verformt, dass die Einschubleisten, meist durch Parallelverschieben um einige Zehntelmillimeter vertikal zueinander versetzt werden.

Dies führt beim horizontalen Einschieben von mit Spritzgussteilen besetzten Werkstückträgern dazu, dass diese beim Einschubvorgang verkanten und sich dann wieder spontan lösen können, was dann zu einem Herunterfallen der Bauteile führen kann, zumal diese im Regelfall aus zwei aufeinander gestapelten Teilformen bestehen.

Ausgehend von dem vorgenannten Stand der Technik liegt der Erfindung die Aufgabe zugrunde, eine Handhabungsvorrichtung anzugeben, mit der auch ein Einschieben von Werkstückträgern in bis zu einem gewissen Grad deformierte Stapelboxen möglich ist, ohne dass es zu einem Verkanten des Werkstückträgers kommt. Ferner besteht die Aufgabe darin, ein entsprechend optimiertes System, umfassend eine derartige Handhabungsvorrichtung sowie eine Stapelbox anzugeben. Auch besteht die Aufgabe darin, ein entsprechend verbessertes Handhabungsverfahren anzugeben, welches sich insbesondere auch für den Stapelprozess von Werkstückträgern mit spritzgegossenen Bauteilen mit einem geringen Gewicht von weniger als 10g eignet.

Diese Aufgabe wird hinsichtlich der Handhabungsvorrichtung mit den Merkmalen des Anspruchs 1, hinsichtlich des Systems mit den Merkmalen des Anspruchs 7 und hinsichtlich des Verfahrens mit den Merkmalen des Anspruchs 10 gelöst.

Vorteilhafte Weiterbildungen der Erfindung sind in den Unteransprüchen angegeben.

Zur Vermeidung von Wiederholungen sollen vorrichtungsgemäß offenbarte Merkmale als verfahrensgemäß offenbart gelten. Ebenso sollen verfahrensgemäß offenbarte Merkmale als vorrichtungsgemäß offenbart gelten.

Der Erfindung liegt der Gedanke zugrunde, mit Hilfe der Handhabungsmittel für die Werkstückträger, letztere entsprechend des individuellen Versatzes der unterschiedlichen Stapelboxen, genauer der jeweiligen, vorzugsweise von jeweils einer Stapelboxseitenwand gebildeten Einschubleisten, zu verkippen, insbesondere um eine gedachte, sich in einer Einschubrichtung erstreckende Achse, so dass sich zwischen den sich in der Einschubrichtung orientierten parallelen Seitenkanten des Werkstückträgers, zumindest in einem in Einschubrichtung vorderen Bereich, ein vertikaler Versatz ergibt, der zumindest näherungsweise dem vertikalen Versatz der linken und der rechten Einschubleiste der Stapelbox entspricht. Anders ausgedrückt werden erfindungsgemäß die Werkstückträger zu den nicht exakt horizontal verlaufenden Einschubleisten ausgerichtet, um somit ein Verkanten des Werkstückträgers im Eingangsbereich eines Einschubfaches, d.h. in den im Querschnitt bevorzugt U-förmig bzw. nutförmig konturierten Aufnahmen bzw. Profilabschnitten der Einschubleisten zu verhindern. Hierzu ist es notwendig, den vertikalen Versatz der Seitenkanten des Werkstückträgers durch eine entsprechende Relativbewegung der Handhabungsmittel an den vertikalen Versatz der rechten und linken Einschubleiste der Stapelbox anzupassen. Hierzu wird ein vertikaler Versatz der beiden Einschubleisten (insbesondere Seitenwände) der Stapelbox erfasst, beispielsweise mechanisch oder optisch und die Handhabungsmittel entweder in einem separaten Schritt oder unmittelbar durch den bzw. gleichzeitig mit dem Erfassungsschritt so verstellt, dass ein den Einschubleisten entsprechender Versatz der parallelen, in der Einschubrichtung orientierten Seitenkanten des Werkstückträgers zumindest an einem in Einschubrichtung vorderen Ende resultiert.

Wie erwähnt ist es möglich und bevorzugt, dass ein Erfassen eines Versatzes und ein entsprechendes Einstellen eines Versatzes bei den Handhabungsmitteln gleichzeitig bzw. in einem Schritt erfolgt. Alternativ ist es auch denkbar, dass das Erfassen des Seitenwandversatzes bzw. des Einschubleistenversatzes und das Einstellen eines entsprechenden Versatzes bei den Handhabungsmitteln in separaten bzw. nacheinander folgenden Schritten realisiert ist, beispielsweise indem mittels eines Sensors ein Versatz erfasst und die Handhabungsmittel über eine entsprechende Aktuatorik, gesteuert von mit den Sensormitteln verbundenen Logikmitteln zur Einstellung des Versatzes betätigt werden.

Durch die erfindungsgemäße Ausgestaltung der Handhabungsvorrichtung bzw. des Systems und die Durchführung des erfindungsgemäßen Verfahrens kann ein Verkanten von Werkstückträgern beim Einschieben zumindest weitgehend vermieden werden.

Das Relativverstellen von Handhabungsmitteln für die Werkstückträger und der Stapelbox kann beispielsweise und bevorzugt mittels eines Stapelboxaufzuges durchgeführt werden, der die Stapelbox vertikal relativ entsprechend der Rasterung der Einschubfächer nach mindestens einem Einschubvorgang, vorzugsweise nach jedem Einschubvorgang relativ zu den Handhabungsmitteln verstellt. Zusätzlich oder alternativ ist es möglich, die Handhabungsmittel zu einer bewegten oder feststehenden Stapelbox zu verstellen, beispielsweise wenn als Handhabungsmittel ein beispielsweise mittels eines Roboterarms bewegbarer Greifer eingesetzt wird.

Weiterbildungsgemäß ist vorgesehen, dass die Handhabungsmittel für die Werkstückträger zwei, insbesondere unabhängig voneinander, in vertikaler Richtung verstellbare, bevorzugt auslenkbare, vorzugsweise schienenförmige bzw Auflagen für die Werkstückträger bereitstellende, Handhabungselemente aufweisen, wobei jeder in der Einschubrichtung orientierten Seitenkante des Werkstückträgers ein solches Handhabungselement zugeordnet ist. Durch die vertikalen relativ zueinander verstellenden Handhabungselemente kann zwischen diesen ein Versatz eingestellt werden, der dem erfassten bzw. festgestellten Versatz der Einschubleisten genauer der Profilierungen der Einschubleisten entspricht. Das Einstellen kann beispielsweise motorisch erfolgen, indem die Handhabungselemente entsprechend eines festgestellten Versatzes relativ zueinander verstellt werden. Ganz besonders bevorzugt ist es, wenn das Einstellen des Versatzes der Handhabungselemente automatisch bzw. gleichzeitig mit dem Erfassen des Versatzes der Einschubleisten erfolgt, beispielsweise indem die Handhabungselemente, auf welchen bevorzugt die Werkstückträger in Richtung Einschubfach gleiten oder auf sonstige Weise bewegt werden können entweder unmittelbar mit der Stapelbox oder mit der Stapelbox zugeordneten, von dieser separaten Zentriermittel zusammenwirken, die die Position der jeweiligen Einschubleiste bzw. des zu befüllenden Einschubfachs definierenden Einschubleistenabschnitte vorgeben.

Besonders bevorzugt ist es, wenn die Handhabungsmittel zum Erfassen des Einschubleistenversatzes und Einstellen des Handhabungsmittelversatzes entweder unmittelbar mit den Einschubleisten oder mit den Einschubleisten zugeordneten, der Stapelbox integralen oder von dieser separaten Zentriermitteln zusammenwirken, wobei die Zentriermittel, insbesondere durch eine entsprechende Positionierung oder Anordnung an der Stapelbox einen festen Positionsbezug zu den Einschubleisten, d.h. zu deren Profilierung bzw. den durch diese definierten Schubfächer bzw. seitlichen Schubfächerabschnitte aufweisen.

Die Handhabungsmittel, insbesondere die vorerwähnten, bevorzugt schienenartigen bzw. einer Auflage für die Werkstückträger bereitstellenden Handhabungselemente wirken nun mechanisch mit den Zentriermitteln oder unmittelbar mit den Einschubleisten bzw. Einschubleistenabschnitten zusammen, insbesondere indem die Handhabungselemente in entsprechende Aufnahmen der Zentriermittel bzw. unmittelbar in die Einschubleisten einfahren und somit eine Zentrierung der Handhabungselemente zu den Einschubleisten erfolgt und dadurch automatisch beim Erfassen des vertikalen Versatzes der Einschubleisten einer Einstellung des vertikalen Versatzes der Handhabungselemente zueinander erfolgt, wobei bevorzugt die Zentriermittel oder die Einschubleisten, jedenfalls der Wirkpartner der Handhabungsmittel und/oder die Handhabungsmittel bzw. Handhabungselemente selbst entsprechende Einlaufschrägen aufweisen, die für die entsprechende Zentrierung bzw. Einstellung des vertikalen Versatzes der Handhabungsmittel Sorge tragen. Bevorzugt sind also Mittel vorgesehen, die bei einer im wesentlichen konstanten Bewegung der Handhabungsmittel, diese im Falle eines Versatzes der Einschubleisten mit einer Kraftkomponente in vertikaler Richtung beaufschlagen, z.B. durch das Versehen von Einlaufschrägen, um so den Versatz bei den Habhabungsmitteln einzustellen.

Ganz besonders bevorzugt ist es dabei im Falle des Vorsehens zweier Handhabungselemente, wenn diese im Wesentlichen in horizontaler Richtung aufeinanderzu und/oder voneinander weg verstellbar sind, um auf diese Weise mit den Zentriermitteln oder unmittelbar mit den Einschubleisten zusammenwirken zu können. Die Handhabungselemente sind hierzu bevorzugt gelenkig gelagert, wobei grundsätzlich das Vorsehen eines Kugelgelenks möglich ist, um sowohl ein Relativbewegen in einer Horizontalebene als auch senkrecht hierzu, d.h. in einer Vertikalebene zu ermöglichen. Auch ist eine kardanische Anlenkung möglich mit einer horizontal und einer vertikal verlaufenden Schwenkachse.

Die Relativbewegung senkrecht zur Vertikalrichtung der Handhabungselemente zueinander kann beispielsweise mittels eines Pneumatikantriebs realisiert werden. Grundsätzlich ist es auch denkbar die Handhabungselemente durch Parallelverstellen zueinander auszurichten. Wichtig ist in erster Linie nur die Möglichkeit zur Einstellung eines Vertikalversatzes. Für den Fall des unmittelbaren Zusammenwirkens mit den Einschubleisten ist es vorteilhaft, wenn die Einschubleisten eine Länge bzw. bezogen auf die Stapelbox eine größere Tiefe aufweisen als die Werkstückträger, um somit einen Eingangsbereich bzw. vorderer Einschubbereich der Einschubfächer für die Zentrieraufgabe optimal nutzen zu können.

Im Hinblick auf die Ausgestaltung der vorgenannten Zentriermittel gibt es unterschiedliche Möglichkeiten. So kann es sich beispielsweise um im Bereich der Einschubleisten bzw. Seitenwände der Stapelbox angeordnete Öffnungen handeln, in die die Handhabungsmittel, insbesondere die Handhabungselemente einfahren, um so den Vertikalversatz einzustellen. Alternativ ist es möglich, von der Stapelbox separate Zentriermittel vorzusehen, beispielsweise in Form von Zentrierleisten, die noch weiter bevorzugt eine Zentrier-Rasterung haben, die der Rasterung der Profilabschnitte der Einschubleisten entspricht. Durch Andocken der Zentrierleisten an definierten Positionen der Stapelbox können die Zentrierleisten zu den Einschubleisten ausgerichtet werden und geben dann den Versatz für die Handhabungsmittel vor. Die Zentrierleisten werden bevorzugt so angeordnet, dass sie sich in Richtung der Hocherstreckung, d.h. in vertikaler Richtung erstrecken und die Stapelbox zwischen sich aufnehmen. Das Andocken der Zentrierleisten an der Stapelbox kann beispielsweise durch das Eingreifen in definiert zu den Fächern angeordnete Öffnungen erfolgen oder was bevorzugt ist durch Eingreifen in ein Einschubfach, insbesondere ein unterstes Einschubfach, welches noch weiter bevorzugt nicht zur Aufnahme eines Werkstückträgers genutzt wird.

Bevorzug sind im Falle des Vorsehens von Handhabungselementen diese seitlich in Aussparungen der Zentrierleisten einfahrbar, wobei die Aussparungen noch weiter bevorzugt mit Anlaufschrägen versehen sind, um eine Vertikalbewegung bzw. Ausrichtung der Handhabungsmittel zu bewirken, wenn die Handhabungselemente zumindest näherungsweise in horizontaler Richtung aufeinanderzu oder voneinander weg, jedenfalls in die Aufnahme der Zentrierleisten hinein verstellt werden.

Grundsätzlich ist es möglich, insbesondere für den Fall der kombinierten Erfassung und Einstellung entsprechender Versätze, die Mittel so auszubilden, insbesondere durch das Vorsehen entsprechender Zentriermittel oder das unmittelbare Zusammenwirken mit den Einschubleisten, dass der vertikale Versatz der Einschubleisten für jedes Einschubfach neu erfasst und die Handhabungsmittel entsprechend eingestellt werden. Grundsätzlich denkbar ist es jedoch auch, insbesondere für den Fall, dass die Einschubleisten eine feste, nicht veränderliche Rasterung aufweisen, insbesondere indem die Einschubleisten als Strangpressprofil ausgebildet sind, den Versatz einmal zu erfassen und die Handhabungsmittel für mehrere Einschubvorgänge entsprechend einzustellen, insbesondere indem vor jedem Einschubvorgang nach der Aufnahme des entsprechenden Werkstückträgers die Einstellung anhand des einmal erfassten Versatzes erfolgt oder aber die Handhabungsmittel werden einmal in vertikaler Richtung relativ zueinander versetzt, entsprechend des Versatzes der Einschubleisten zueinander und dieser Versatz wird für mehrere Einschubvorgänge unverändert gehalten.

Wie bereits angedeutet ist es nicht zwingend, das Erfassen des Einschubleistenversatzes und das entsprechende Ausrichten bzw. Einstellen eines Versatzes bei den Handhabungsmitteln in einem gemeinsamen Schritt durchzuführen.

Es ist auch denkbar, einen Versatz, beispielsweise über einen optischen Sensor oder sonstige Sensormittel zu detektieren bzw. auszuwerten und dann, beispielsweise elektromotorisch, pneumatisch oder hydraulisch oder durch sonstige Aktormittel die Seitenkanten des Werkstückträgers entsprechend dem festgestellten Versatz der Einschubleisten einzustellen.

Offenbart ist auch die Verwendung einer nach dem Konzept der Erfindung ausgebildeten Handhabungsvorrichtung zum Stapeln von zur Aufnahme von Laborverbrauchsgütern wie Pipettenspitzen, Reaktionsgefäßen, Kontaktlinsengießformen oder Inhaliergerätebauteilen ausgelegten oder mit entsprechenden Spritzgussteilen bestückten Werkstückträgern in Einschubfächern von Stapelboxen.

Die Erfindung führt auch auf ein System, umfassend eine wie zuvor beschrieben ausgebildete, nach dem Konzept der Erfindung gestaltete Handhabungsvorrichtung und eine Stapelbox. Diese umfasst zwei bevorzugt zumindest im Neuzustand der Stapelbox parallele, vertikal orientierte Einschubleisten, wobei die beiden Einschubleisten gemeinsam mehrere Einschubfächer definieren. Hierzu weisen die Einschubleisten eine entsprechende Profilierung auf, wobei einander gegenüberliegende Profilierungen der beiden Einschubleisten die Einschubfächer vorgeben. Bevorzugt weisen die Einschubleisten nutförmige Konturen auf, wobei zwei einander gegenüberliegende nutförmige Konturen ein Einschubfach definieren. Wie bereits mehrfach angedeutet ist es bevorzugt, die Einschubleisten bzw. Seitenwände oder Seitenwandabschnitte der bevorzugt quaderförmigen Stapelbox als Strangpressprofile, insbesondere aus einer Leichtmetalllegierung auszubilden, um somit eine feste bzw. definierte Rasterung der entsprechenden Profilabschnitte zu erhalten.

Bevorzugt umfasst das System auch mindestens einen Werkstückträger, der ganz besonders bevorzugt zur Aufnahme von leichten Spritzgussteilen mit einem Stückgewicht von weniger als 10g, z.B. von Laborverbrauchsmaterial wie Pipettenspitzen, medizinischen Reaktionsgefäßen, aus zwei Teillinsenformen zusammengesetzten Kontaktlinsengießformen oder Inhaliergerätebauteilen ausgebildet ist.

Das erfindungsgemäße Verfahren wird unter Verwendung einer zuvor beschriebenen erfindungsgemäßen Handhabungsvorrichtung ausgeführt und erreicht, dass ein Vertikalversatz von zwei in einer Einschubrichtung orientierten Seitenkanten des Werkstückträgers so eingestellt wird, dass dieser dem Versatz der Einschubleisten der Stapelbox entspricht.

Weitere Vorteile, Merkmale und Einzelheiten der Erfindung ergeben sich aus der nachfolgenden Beschreibung eines bevorzugten Ausführungsbeispiels sowie anhand der Zeichnungen.

Diese zeigen in:

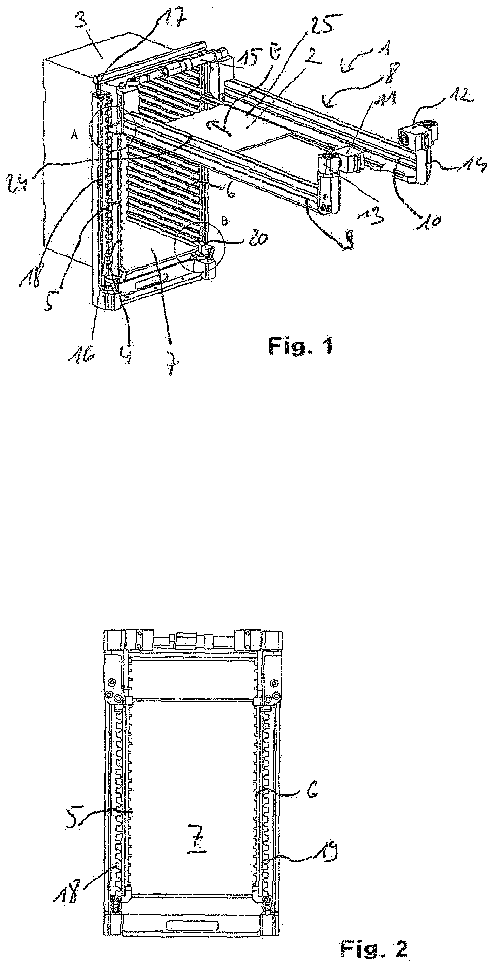

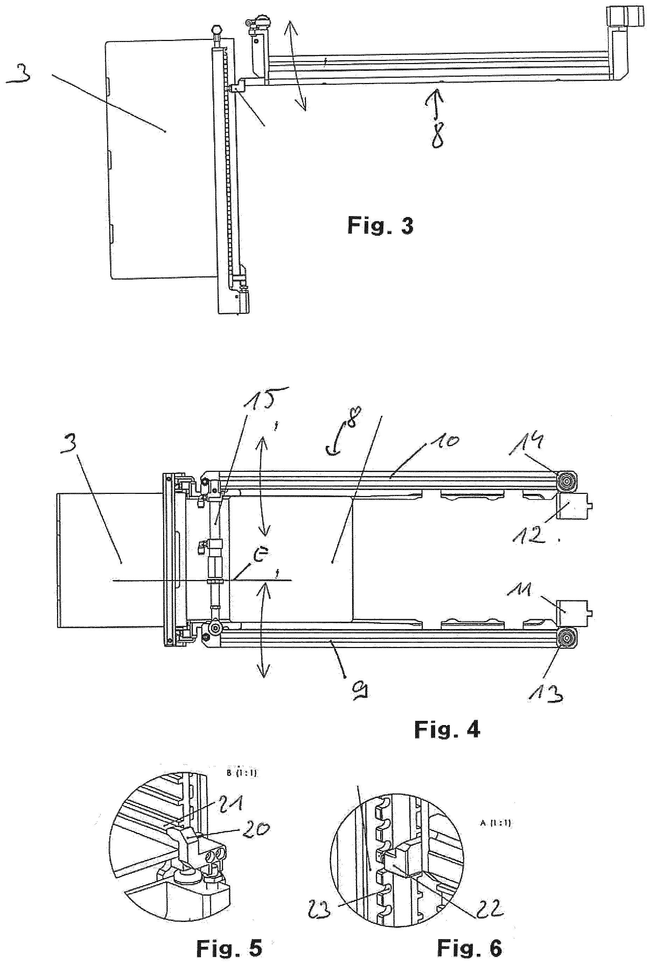

- Fig. 1 bis Fig. 6:: unterschiedliche Darstellungen, teilweise Detaildarstellungen eines Systems, umfassend eine Handhabungsvorrichtung sowie eine Stapelbox und Werkstückträger.

In den Figuren sind gleiche Elemente und Elemente mit der gleichen Funktion mit den gleichen Bezugszeichen gekennzeichnet.

In den Fig. 1 bis 6 sind unterschiedliche Darstellungen und Ansichten einer Handhabungsvorrichtung 1 gezeigt, wobei mit der Handhabungsvorrichtung 1 Werkstückträger 2 in einer Stapelbox 3 übereinander gestapelt werden können. Hierzu werden die Werkstückträger 2 in übereinander angeordnete Einschubfächer 4 der Stapelbox 3 eingeschoben. Die Stapelbox 3 bildet zusammen mit der Handhabungsvorrichtung 1 ein Handhabungssystem.

Die Einschubfächer 4 werden definiert von zwei einander gegenüberliegenden Einschubleisten, d.h. einer rechten und einer linken sich in Hochrichtung bzw. Stapelrichtung erstreckenden Einschubleiste 5, 6, die die Seitenwände der quaderförmigen Stapelbox bilden, welche einen vorderen Einschub- bzw. Öffnungsbereich 7 aufweist. Die Einschubleisten 5, 6 sind jeweils als Aluminiumstrangpressprofile ausgebildet und weisen eine nutförmige Profilierung auf, wobei jeweils zwei, hier beispielsweise zumindest näherungsweise U-förmig konturierte, einander gegenüberliegende Nutprofilabschnitte ein Einschubfach 4 begrenzen. Solange sich die entsprechenden Profilabschnitte der Einschubleisten 5, 6 exakt gegenüberliegen, d.h. in einer gemeinsamen Horizontalebene angeordnet sind, ist das Einschieben der Werkstückträger 2 unproblematisch. Während des Transportes der Stapelbox 3 von Arbeitsstation zu Arbeitsstation wird die Stapelbox jedoch stark beansprucht und es kommt im Laufe der Zeit zu einer Deformation, insbesondere einer parallelogrammartigen Parallelverschiebung der Einschubleisten 5, 6 zueinander und damit zu einem Vertikalversatz der Einschubleisten 5, 6 bzw. der die Einschubfächer 4 begrenzenden Profilabschnitte der Einschubleisten 5, 6. Die Rasterung der Einschubleisten 5, 6, d.h. die jeweilige Anordnung der Profilabschnitte zueinander bleibt dabei zumindest näherungsweise aufgrund der Ausbildung der Einschubleisten 5, 6 als Strangpressprofile konstant. Bereits ein Vertikalversatz von wenigen Zehntelmillimetern führt dazu, dass, wenn ein Werkstückträger 2 in einer Einschubrichtung E in Einschubfach 4 eingeschoben werden soll, es zu einer Verkantung kommen kann, die sich wiederum spontan löst, wodurch dann die darauf angeordneten Kunststoffspritzgussteile herunterfallen können, was es zu vermeiden gilt.

Die Handhabungsvorrichtung 1 umfasst weiterhin Handhabungsmittel 8, die in dem gezeigten Ausführungsbeispiel wiederum zwei als Auflageschienen ausgebildete, langgestreckte Handhabungselemente 9, 10 umfassen, die unabhängig voneinander vertikal verstellbar, hier um jeweils ein Schwenkgelenk 11, 12 mit horizontaler Schwenkachse auslenkbar sind. Zusätzlich sind die Handhabungselemente 9, 10 um vertikal orientierte Schwenkgelenke 13, 14 verschwenkbar, um die Handhabungselemente 9, 10 in einer Horizontalebene aufeinanderzu bzw. voneinander weg bewegen zu können. Zur Aktuierung der letztgenannten Bewegung ist ein als pneumatischer Antrieb ausgebildeter Antrieb 15 vorgesehen, mit welchem die Handhabungselemente 9, 10 um die vertikal orientierten Schwenkachsen verschwenkbar sind.

Die Handhabungsvorrichtung 1 bzw. das System umfasst zudem Mittel 16 zur Erfassung eines vorerwähnten Vertikalversatzes der beiden Einschubleisten 5, 6. Die Mittel 16 wiederum umfassen in dem gezeigten Ausführungsbeispiel hierzu als Zentrierleisten ausgebildete Zentriermittel 17, deren Rasterung der Profilrasterung der Einschubleisten 5, 6 entspricht. Die Zentrierleisten 18, 19 sind von der Stapelbox 3 separat und können an diese angedockt werden. In dem gezeigten Ausführungsbeispiel fahren hierzu Zentriernasen 20 der Zentriermittel 17 an eine definierte Position der Stapelbox 3 ein, in dem konkreten Ausführungsbeispiel in eine unterste Einschubleiste, die im Folgenden als Zentrieröffnung 21 bezeichnet wird. Hierdurch werden die Zentrierleisten 18, 19 exakt relativ zu der jeweiligen Rasterung der zugehörigen Einschubleiste 5, 6 positioniert, so dass die Zentrierleisten 18, 19 die jeweilige linke bzw. rechte Position eines jeden Einschubfaches 4 definieren.

Die ebenfalls zu den Mitteln 16 gehörenden Handhabungselemente 9, 10 weisen im Bereich ihres freien, d.h. der Stapelbox 3 zugewandten Endes jeweils einen Zentrierpin 22 auf, wobei die Zentrierpins 22 gleichzeitig durch Betätigung des Antriebes 5 von außen in Zentriertaschen 23 Zentrierleisten eingeschoben werden können. Die Zentriertaschen 23 sind gerundet ausgeführt, weisen also Einlaufschrägen auf, die die Zentrierpins 22 und damit die Handhabungselemente bzw. die Handhabungsmittel 8 zu der jeweiligen Einschubfachseite zentrieren. Hierdurch wird zum einen der Vertikalversatz der Einschubleisten 5, 6 erfasst und gleichzeitig ein entsprechender Vertikalversatz der Handhabungsmittel 8, genauer der Handhabungselemente 9, 10 eingestellt, wodurch wiederum in der Einschubrichtung E orientierte, parallele Seitenkanten 24, 25, zumindest in einem in Einschubrichtung vorderen Bereich einen Vertikalversatz erhalten, der dem Vertikalversatz der Einschubleisten entspricht. Anders ausgedrückt wird also der Werkstückträger parallel zu einer von einem Einschubfach definierten Einschubebene ausgerichtet, so dass durch einen entsprechenden Vortrieb in der Einschubrichtung E der Werkstückträger exakt in das jeweilige Einschubfach eingeschoben werden kann. Nach jedem Einschubvorgang erfolgt eine Relativbewegung zwischen Stapelbox 3 und Handhabungsmitteln 8, insbesondere durch vertikales Verstellen der Stapelbox 3 mittels eines nicht gezeigten Stapelboxaufzuges. Während dieser Verstellbewegung bleiben die Zentrierleisten 18, 19 wie gezeigt positioniert und definieren dann aufgrund der gleichen Rasterung unmittelbar die exakte Position bzw. den Vertikalversatz.

Anstelle des Vorsehens von Zentrierleisten als Zentriermittel 17 können auch unmittelbar die Einschubleisten 5, 6 bzw. deren beispielsweise nutförmige Profilierung als Zentriermittel 17 dienen oder zusätzlich vorgesehene Elemente, bevorzugt Öffnungen, insbesondere seitlich an den Einschubleisten 5, 6. Grundsätzlich ist es auch denkbar die Relativposition, d.h. den Vertikalversatz mittels anderer Sensormittel, beispielsweise optischer Sensormittel zu erfassen und dann, beispielsweise durch eine entsprechende motorische Ansteuerung im Werkstückträger entsprechend auszurichten.

### Bezugszeichen

- 1: Handhabungsvorrichtung
- 2: Werkstückträger
- 3: Stapelbox
- 4: Einschubfächer
- 5: Einschubleiste
- 6: Einschubleiste
- 7: Öffnungsbereich der Stapelbox
- 8: Handhabungsmittel
- 9: Handhabungselement
- 10: Handhabungselement
- 11: Schwenkgelenk
- 12: Schwenkgelenk
- 13: Schwenkgelenk
- 14: Schwenkgelenk
- 15: Antrieb
- 16: Mittel
- 17: Zentriermittel
- 18: Zentrierleiste
- 19: Zentrierleiste
- 20: Zentriernasen
- 21: Zentrieröffnung
- 22: Zentrierpin
- 23: Zentriertasche
- 24: Seitenkante
- 25: Seitenkante
- E: Einschubrichtung

## Patentansprüche

1. Handhabungsvorrichtung (1) zum Nacheinander-Einschieben von Werkstückträgern (2) in übereinander angeordnete, von einer rechten und einer linken vertikalen Einschubleiste (5, 6) begrenzten Einschubfächer (4) einer Stapelbox (3), mit Relativverstellmitteln zum vertikalen Relativverstellen von Handhabungsmitteln (8) der Handhabungsvorrichtung (1) für die Werkstückträger (2) und der Stapelbox (3) nach mindestens einem Einschubvorgang,
**dadurch gekennzeichnet,**
**dass** Mittel (16) vorgesehen sind, mit denen ein vertikaler Versatz zwischen der linken und der rechten Einschubleiste (5, 6) erfassbar ist und dass die Handhabungsmittel (8) derart relativ zueinander beweglich ausgebildet sind, dass sich in einer Einschubrichtung (E) erstreckende parallele Seitenkanten (24, 25) des Werkstückträgers (2) vertikal entsprechend des Versatzes der Einschubleisten (5, 6) relativ zueinander verstellbar sind.

2. Handhabungsvorrichtung nach Anspruch 1,
**dadurch gekennzeichnet,**
**dass** die Handhabungsmittel (8) zwei, insbesondere als Schienen für einen Werkstückträger (2) ausgebildete, den unterschiedlichen Seitenkanten des Werkstückträgers (2) zuordenbare, in vertikaler Richtung, vorzugsweise auch in horizontaler Richtung verstellbare, bevorzugt auslenkbare, Handhabungselemente (9, 10) der Handhabungsmittel (8) zur Erfassung des Versatzes der Einschubleisten (5,6) und/oder zur Einstellung des vertikalen Versatzes der Seitenkanten (24, 25) des Werkstückträgers (2) umfassen.

3. Handhabungsvorrichtung nach einem der Ansprüche 1 oder 2,
**dadurch gekennzeichnet,**
**dass** die Handhabungsmittel (8) mit den Einschubleisten (5, 6) oder mit den Einschubleisten (5, 6) zugeordneten, der Stapelbox (3) integralen oder von dieser separaten, bevorzugt eine der Rasterung der Zentrierleisten (18, 19) entsprechende Rasterung aufweisenden, Zentriermitteln (17) mechanisch, den vertikalen Versatz erfassend zusammenwirkend ausgebildet sind, insbesondere indem Handhabungselemente (9, 10) der Handhabungsmittel (8) seitlich in die Einschubleisten (5, 6) und/oder die Zentriermittel (17) verstellbar sind und die Einstellung des vertikalen Versatzes zwischen den Handhabungselementen (9, 10) über Einlaufschrägen an den Handhabungselementen (9, 10) und/oder der Einschubleisten (5, 6) bzw. den Zentriermitteln (17) erfolgt.

4. Handhabungsvorrichtung nach Anspruch 3,
**dadurch gekennzeichnet,**
**dass** die Zentriermittel (17) zwei an der Stapelbox (3) ausrichtbare, insbesondere an der Stapelbox (3), bevorzugt durch Einschieben in eine der Einschubfächer (4), andockbare Zentrierleisten (18, 19), umfassen, die eine Mehrzahl von übereinander angeordneten Eingriffsstellen zur Wechselwirkung mit den Handhabungsmitteln (8), insbesondere über Einlaufschrägen, aufweisen.

5. Handhabungsvorrichtung nach einem der vorhergehenden Ansprüche,
**dadurch gekennzeichnet,**
**dass** die Mittel (16) derart ausgebildet sind, dass der vertikale Versatz der Einschubleisten (5, 6) für jedes Einschubfach (4) neu erfassbar ist, oder dass die Mittel (16) derart ausgebildet sind, dass der vertikale Versatz der Einschubleisten (5, 6) einmal erfassbar und der erfasste Versatz für mehrere Einschubvorgänge speicherbar ist und/oder ein entsprechend eingestellter Versatz der Handhabungsmittel (8) für mehrere Einschubvorgänge gleich ist.

6. Handhabungsvorrichtung nach einem der vorhergehenden Ansprüche,
**dadurch gekennzeichnet,**
**dass** die Mittel (16) zum Erfassen des Vertikalversatzes der linken und rechten Einschubleiste (5, 6) Sensormittel, insbesondere einen optischen Sensor, oder einen Tastsensor, oder einen akustischen Sensor umfassen und dass die Sensormittel mit Logikmitteln signalleitend verbunden sind, die die Handhabungsmittel (8), insbesondere einen Roboterarm mit Greifer oder zwei motorisch antreibbare Schienen, so ansteuern , dass die Seitenkanten (24, 25) des Werkstückträgers (2) entsprechend des festgestellten Versatzes vertikal zueinander versetzbar sind.

7. System, umfassend eine Handhabungsvorrichtung (1) nach einem der vorhergehenden Ansprüche sowie eine Stapelbox (3) mit mehreren übereinander angeordneten Einschubfächern (4) zur Aufnahme jeweils mindestens eines, bevorzugt ausschließlich eines, Werkstückträgers (2), wobei die Einschubfächer (4) von zwei vertikalen, bevorzugt jeweils als Strangpressprofil ausgebildeten, Einschubleisten (5, 6) begrenzt sind.

8. System nach Anspruch 7,
**dadurch gekennzeichnet,**
**dass** die Stapelbox (3) so deformiert ist, dass die Einschubleisten (5, 6) vertikal versetzt sind.

9. System nach einem der Ansprüche 7 oder 8,
**dadurch gekennzeichnet,**
**dass** dieses einen Werkstückträger (2), insbesondere ausgebildet zur Aufnahme für eine Vielzahl von Spritzgussteilen mit einem Stückgewicht von weniger als 10g, insbesondere Pipettenspitzen, medizinische Reaktionsgefäße, Kontaktlinsengießformen oder Inhaliergerätebauteilen, umfasst.

10. Verfahren zum Nacheinander-Einschieben von, insbesondere zur Aufnahme einer Vielzahl von Spritzgussteilen mit einem Stückgewicht von weniger als 10g ausgebildeten, Werkstückträgern (2) in übereinander angeordnete, von einer rechten und einer linken vertikalen Einschubleiste (5, 6) begrenzten Einschubfächer (4) einer Stapelbox (3), unter Verwendung einer Vorrichtung nach einem der Ansprüche 1 bis 6, wobei nach mindestens einem Einschubvorgang die Handhabungsmittel (8) für die Werkstückträger (2) und die Stapelbox (3) relativ zueinander verstellt werden,
**dadurch gekennzeichnet,**
**dass** sich in einer Einschubrichtung (E) erstreckende parallele Seitenkanten des Werkstückträgers (2) vertikal entsprechend eines vertikalen Versatzes zwischen der linken und der rechten Einschubleiste (5, 6) in vertikaler Richtung relativ zueinander versetzt werden.

## Claims

1. A handling device (1) for successively inserting workpiece supports (2) into insertion compartments (4) of a stacking box (3), said insertion compartments (4) being disposed one above the other and limited by right and left vertical insertion strips (5, 6), comprising relative adjusting means for vertically adjusting handling means (8) of the handling device (1) for the workpiece supports (2) and the stacking box (3) relative to each other after at least one inserting action,
**characterized in that**
means (16) are provided with which a vertical offset between the left and right insertion strips (5, 6) can be detected and that the handling means (8) are mobile relative to each other in such a manner that parallel side edges (24, 25) of the workpiece support (2) that extend in a insertion direction (E) can be vertically adjusted relative to each other corresponding to the offset of the insertion strips (5, 6).

2. The handling device according to claim 1,
**characterized in that**
the handling means (8) comprise two handling elements (9, 10) of the handling means (8) for detecting the offset of the insertion strips (5, 6) and/or for adjusting the vertical offset of the side edges (24, 25) of the workpiece support (2), said handling elements (9, 10) being configured in particular as rails for a workpiece support (2), being associated with the different side edges of the workpiece support (2), and being adjustable, preferably deflectable, in the vertical direction and preferably also in the horizontal direction.

3. The handling device according to any one of claims 1 or 2,
**characterized in that**
the handling means (8) being configured to mechanically cooperate with the insertion strips (5, 6) or with centering means (17) associated with the insertion strips (5, 6) so as to detect the vertical offset, the centering means (17) being integral with the stacking box (3) or separate therefrom and preferably having notches corresponding to the notches of the centering strips (18, 19), the cooperation being realized in particular by handling elements (9, 10) of the handling means (8) being laterally adjustable into the insertion strips (5, 6) and/or into the centering means and the vertical offset between the handling elements (9, 10) being adjusted via entry slopes on the handling elements (9, 10) and/or of the insertion strips (5, 6) or on the centering means (17).

4. The handling device according to claim 3,
**characterized in that**
the centering means (17) comprise two centering strips (18,19) that can be aligned on the stacking box (3), in particular docked to the stacking box (3) by being inserted into one of the insertion compartments (4), said centering strips (18, 19) having a plurality of engagement points which are disposed one above the other for interacting with the handling means (8), in particular via entry slopes.

5. The handling device according to any one of the preceding claims,
**characterized in that**
the means (16) are configured in such a manner that the vertical offset of the insertion strips (5, 6) can be detected anew for each insertion compartment (4) or that the means (16) are configured in such a manner that the vertical offset of the insertion strips (5, 6) can be detected once and the detected offset can be stored for multiple inserting actions and/or a correspondingly set offset of the handling means (8) is the same for multiple inserting actions.

6. The handling device according to any one of the preceding claims,
**characterized in that**
the means (16) for detecting the vertical offset of the left and right insertion strips (5, 6) comprise sensor means, in particular an optical sensor, or a tactile sensor, or an acoustic sensor, and that the sensor means are in signal communication with logic means which control the handling means (8), in particular a robotic arm having a gripper or two motor-driven rails, in such a manner that the side edges (24, 25) of the workpiece support (2) can be vertically offset relative to each other according to the determined offset.

7. A system comprising a handling device (1) according to any one of the preceding claims and a stacking box (3) having multiple insertion compartments (4) disposed one above the other and each serving to accommodate at least one, preferably exclusively one, workpiece support (2), the insertion compartments (4) being limited by two vertical insertion strips (5, 6) which preferably are each formed by an extruded profile.

8. The system according to claim 7,
**characterized in that**
the stacking box (3) is deformed in such a manner that the insertion strips (5, 6) are vertically offset.

9. The system according to any one of claims 7 or 8,
**characterized in that**
the system comprises a workpiece support (2), configured in particular to accommodate a plurality of injection-molded parts having a unit weight of less than 10 g, in particular pipette tips, medical reaction vessels, contact-lens molds or inhalation-device components.

10. A method for successively inserting workpiece supports (2), configured in particular to accommodate a plurality of injection-molded parts having a unit weight of less than 10 g, into insertion compartments (4) of a stacking box (3) which are disposed on above the other and limited by right and left vertical insertion strips (5, 6), using a device according to any one of claims 1 to 6, the handling means (8) for the workpiece supports (2) and the stacked box (3) being adjusted relative to each other after at least one inserting action,
**characterized in that**
parallel side edges of the workpiece support (2) that extend in a insertion direction (E) are vertically offset relative to each other in the vertical direction corresponding to a vertical offset between the left and right insertion strips (5, 6).

## Revendications

1. Dispositif de manutention (1) pour insérer successivement des supports de pièces (2) dans des compartiments d'insertion (4) d'un boîtier d'empilage (3), les compartiments d'insertion (4) étant disposés l'un au-dessus de l'autre et limités par des barres d'insertion (5, 6) verticales droite et gauche, comprenant des moyens de déplacement relatif destinés à déplacer relativement des moyens de manutention (8) du dispositif de manutention (1) pour les supports de pièces (2) et le boîtier d'empilage (3) après au moins une opération d'insertion,
**caractérisé en ce que**
des moyens (16) sont prévus qui permettent de détecter un décalage vertical entre les barres d'insertion (5, 6) droite et gauche et **en ce que** les moyens de manutention (8) sont mobiles l'un par rapport à l'autre de telle manière que des bords latéraux (24, 25) parallèles du support de pièces (2) qui s'étendent dans une direction d'insertion (E) peuvent être déplacés verticalement l'un par rapport à l'autre de manière correspondante au décalage des barres d'insertion (5, 6).

2. Dispositif de manutention selon la revendication 1,
**caractérisé en ce que**
les moyens de manutention (8) comprennent deux éléments de manutention (9, 10) du moyen de manutention (8) pour détecter le décalage des barres d'insertion (5, 6) et/ou pour ajuster le décalage vertical des bords latéraux (24, 25) du support de pièces (2), les éléments de manutention (9, 10) étant réalisés notamment comme rails pour un support de pièces (2), pouvant être associé aux différents bords latéraux du support de pièces (2) et étant déplaçable, préférablement détournable, dans la direction verticale et, de préférence, aussi dans la direction horizontale.

3. Dispositif de manutention selon l'une quelconque de la revendication 1 ou la revendication 2,
**caractérisé en ce que**
les moyens de manutention (8) sont adaptés pour coopérer mécaniquement, de manière à détecter le décalage vertical, avec les barres d'insertion (5, 6) ou avec des moyens de centrage (17) associés aux barres d'insertion (5, 6), étant intégraux au boîtier d'empilage (3) ou séparés de celui-ci et ayant, de préférence, une crémaillère correspondant à la crémaillère des barres de centrage (18, 19), la coopération s'effectuant notamment par des éléments de manutention (9, 10) des moyens de manutention (8) étant déplaçables latéralement dans les barres d'insertion (5, 6) et/ou les moyens de centrage (17) et le réglage du décalage vertical entre les éléments de manutention (9, 10) s'effectuant par l'intermédiaire de pentes d'entrée sur les éléments de manutention (9, 10) et/ou des barres d'insertion (5, 6) ou les moyens de centrage (17).

4. Dispositif de manutention selon la revendication 3,
**caractérisé en ce que**
les moyens de centrage (17) comprennent deux barres de centrage (18, 19) orientable sur le boîtier d'empilage (3), notamment accrochable au boîtier d'empilage (3), de préférence par insertion dans un des compartiments d'insertion (4), les barres de centrage (18, 19) ayant une pluralité de points d'engagement disposés l'un au-dessus de l'autre pour l'interaction avec les moyens de manutention (8), notamment par des pentes d'entrée.

5. Dispositif de manutention selon l'une quelconque des revendications précédentes, **caractérisé en ce que**
les moyens (16) sont configurés de telle manière que le décalage vertical des barres d'insertion (5, 6) peut être détecté à nouveau pour chaque compartiment d'insertion (4) ou **en ce que** les moyens (16) sont configurés de telle manière que le décalage vertical des barres d'insertion (5, 6) peut être détecté une fois et le décalage détecté peut être enregistré pour plusieurs opérations d'insertion et/ou un décalage des moyens de manutention (8) réglé de manière correspondante est le même pour plusieurs opérations d'insertion.

6. Dispositif de manutention selon l'une quelconque des revendications précédentes, **caractérisé en ce que**
les moyens (16) destinés à détecter le décalage vertical des barres d'insertion (5, 6) gauche et droite comprennent des moyens de capteur, notamment un capteur optique, ou un capteur tactile, ou un capteur acoustique, et **en ce que** les moyens de capteur sont en communication par signaux avec des moyens de logique qui commandent les moyens de manutention (8), notamment un bras robotique ayant une pince ou deux rails entraînables par moteur, de telle manière que les bords latéraux (24, 25) du support de pièces (2) peuvent être décalés verticalement l'un à l'autre selon le décalage déterminé.

7. Système comprenant un dispositif de manutention (1) selon l'une quelconque des revendications précédentes et un boîtier d'empilage (3) ayant plusieurs compartiments d'insertion (4) disposés l'un au-dessus de l'autre pour recevoir au moins un, de préférence seulement un, support de pièces (2), les compartiments d'insertion (4) étant limités par deux barres d'insertion (5, 6) verticales réalisées chacune, de préférence, comme profilé extrudé.

8. Système selon la revendication 7,
**caractérisé en ce que**
le boîtier d'empilage (3) est déformé de telle manière que les barres d'insertion (5, 6) sont décalées verticalement.

9. Système selon l'une quelconque de la revendication 7 ou la revendication 8,
**caractérisé en ce que**
le système comprend un support de pièces (2), configuré notamment pour recevoir une pluralité de pièces moulées par injection ayant un poids unitaire inférieur à 10 g, notamment des pointes de pipette, des récipients de réaction médicaux, des moules de lentilles de contact ou des composants d'inhalateurs.

10. Procédé pour insérer successivement des supports de pièces (2), configurés notamment pour recevoir une pluralité de pièces moulées par injection ayant un poids unitaire inférieur à 10 g, dans des compartiments d'insertion (4) d'un boîtier d'empilage (3) qui sont disposés l'un au-dessus de l'autre et limités par des barres d'insertion (5, 6) verticales droite et gauche, en utilisant un dispositif selon l'une quelconque des revendications 1 à 6, les moyens de manutention (8) pour les supports de pièces (2) et le boîtier d'empilage (3) étant déplacés l'un par rapport à l'autre après au moins une opération d'insertion,
**caractérisé en ce que**
des bords latéraux parallèles du support de pièce (2) qui s'étendent dans une direction d'insertion (E) sont décalés verticalement l'un par rapport à l'autre dans la direction verticale de manière correspondante à un décalage vertical entre les barres d'insertion (5, 6) gauche et droite.
